# EUROPEAN PATENT APPLICATION

(11) **EP 3 951 678 A1**
(43) Date of publication of application: **09.02.2022**
(21) Application number: 21180755.7
(22) Date of filing: 22.06.2021
(51) Int. Cl.: G06Q 10/06, G06Q 10/08

(54) **PICK-UP ORDER ALLOCATION SYSTEM AND METHOD**

(30) Priority: 07.08.2020 JP 2020135316
(71) Applicant: Toshiba Tec Kabushiki Kaisha, Shinagawa-ku Tokyo 141-8562 (JP)
(72) Inventor: Kakinuma, Shinya, Shinagawa-ku, Tokyo 141-8562 (JP)
(74) Representative: Bandpay & Greuter

(57) **Abstract**

According to one embodiment, an allocation system includes server to accept a customer pick-up order from a customer terminal and to store the customer pick-up order in a pick-up order list. The customer pick-up order includes a list of items to be purchased. The server determines whether a worker member is available for fulfilling customer pick-up orders based an input of identification information corresponding to the worker member. A worker member terminal presents information corresponding to customer pick-up orders after the worker member has been determined to be available, and accepts a selection operation from the worker member indicating a selection of one of the pick-up orders. The selected one of the pick-up orders is then allocated to the worker member.

## Description

### FIELD

Embodiments described herein relate generally to an allocation system and an allocation program.

### BACKGROUND

Recently, shopping carts be provided with a terminal that has, or can provide, a POS (point of sales) function have entered increasing use.

Also, order pickup services in which a store such as a supermarket accepts orders placed via the Web and then the orderer comes to the store and picks up the ordered items has become more prevalent. Compared with online ordering with home delivery, which is already fairly common for supermarkets and other stores, order pickup type services do not require delivery infrastructure therefore more orders can be accepted for pickup. Therefore, the order pickup service is thought likely to become more widespread in the future.

However, a higher in-store staffing levels are likely to be required in order to smoothly operate increased order pickup services. However, many stores will likely find it hard to increase the size of staff due to labor shortages.

### BRIEF DESCRIPTION OF THE DRAWINGS

FIG. 1 is a block diagram showing a configuration of a store system according to an embodiment.
FIG. 2 is a block diagram showing a schematic configuration of a server.
FIG. 3 shows an example of an order table stored in an order database.
FIG. 4 shows an example of order details stored in an order database.
FIG. 5 shows an example of a membership information table stored in a membership database.
FIG. 6 is a block diagram showing a schematic configuration of a cart POS.
FIG. 7 is a block diagram showing a schematic configuration of a sales clerk terminal.
FIG. 8 is a block diagram depicting functional aspects of various control units in the store system.
FIG. 9 is a flowchart of processing executed in a store system.
FIG. 10 shows an example of a pickup member login screen.
FIG. 11A shows an example of a work list selection screen.
FIG. 11B shows an example of the work list selection screen.
FIG. 12A shows an example of a shopping list clearing screen.
FIG. 12B shows an example of the shopping list clearing screen.
FIG. 13 shows an example of a sales clerk login screen.
FIG. 14 shows an example of a sales clerk check screen.
FIG. 15 shows another example of the work list selection screen.

### DETAILED DESCRIPTION

The present invention is defined by independent claims, and advantageous embodiments are described in dependent claims.

An embodiment described relates to obtaining workers for executing an in-store order pickup service.

In general, according to one embodiment, an allocation system includes a server configured to accept a customer pick-up order from a customer terminal and to store the customer pick-up order in a pick-up order list. The customer pick-up order includes a list of items to be purchased. The server is configured to determine whether a worker member is available to fulfill customer pick-up orders based on acceptance of an input of identification information corresponding to the worker member. A worker member terminal is configured to present information corresponding to customer pick-up orders on the pick-order list after the worker member has been determined to be available. The worker member terminal is configured to accept a selection operation by the worker member indicating a selection of one of the pick-up orders. The server is further configured to allocate the selected one of the pick-up orders to the worker member after the selection operation is accepted at the worker member terminal.

### First Embodiment

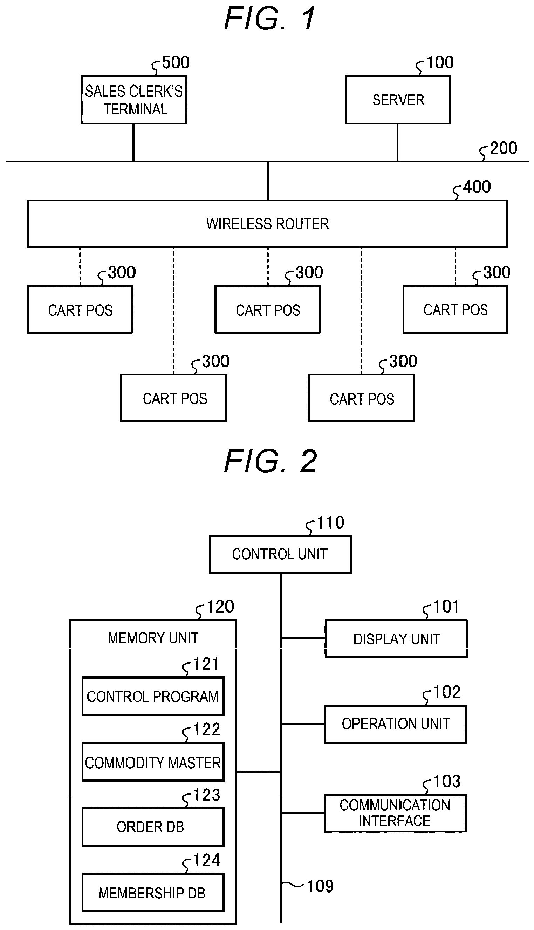

FIG. 1 is a block diagram showing a configuration of an allocation system according to an embodiment. The allocation system includes a server 100, a network 200, a cart POS (point of sales) 300, a wireless router 400, a sales clerk terminal 500 and the like.

The network 200 is, for example, a LAN (local area network). The wireless router 400 wirelessly connects the cart POS 300 to the network 200 and relays communication between the cart POS 300 and the server 100 and/or the sales clerk terminal 500.

The allocation system according to this first embodiment is aimed at making it easier to secure services of a temporary or casual worker to gather products to satisfy customer orders from an in-store order pickup service. In this context, the order pickup service is a service in which a store, such as a supermarket, accepts an order for a commodity placed via the Web by a customer and then the orderer (ordering customer) comes to the store to pick up the ordered commodity. In this service, the store provides registers a customer as a person who can become a worker (may be referred to as a worker member, a pickup member, a working customer) for executing order pickup service orders in addition to registering the customer as a general shopper in a customer membership service or the like.

The cart POS 300 is an example of a worker member terminal and, in this example, is a tablet-type information processing device attached to a shopping cart. In some examples, the worker member terminal may be a mobile information processing device such as a smartphone. Such a worker member may visit the store at his or her convenience without being formally scheduled or the like. Upon arrival at the store, the worker member logs in using the cart POS 300. After log-in, the worker member is allocated work/tasks (e.g., picking items for another customer's pickup order). The now logged-in worker member carries out the allocated work/tasks. After the allocated/assigned work is finished, the worker member receives a confirmation of work/task completion from a sales clerk. Completion of the allocated work/task earns the worker member a reward.

FIG. 2 is a block diagram showing a schematic configuration of the server 100. The server 100 has a display unit 101, an operation unit 102, a communication interface (I/F) 103, a bus 109, a control unit 110, and a memory unit 120 or the like.

The display unit 101 is, for example, a display device such as a liquid crystal display. The operation unit 102 is, for example, an input device such as a keyboard or a mouse. The communication interface 103 is for communicating with another device via the network 200. The communication interface 103 can be used for communicating with the sales clerk terminal 500 or with the cart POS 300 via the wireless router 400. The bus 109 is a system bus such as a data bus or an address bus and connects the display unit 101, the operation unit 102, the communication interface 103, the control unit 110, and the memory unit 120 to each other.

The control unit 110 (controller) comprises a CPU (central processing unit), a ROM (read-only memory), and a RAM (random-access memory). The ROM stores various programs to be executed by the CPU as well as various data. The RAM temporarily stores data and/or programs when the CPU executes various programs.

The memory unit 120 is, for example, a memory device such as an HDD (hard disk drive) or an SSD (solid-state drive). The memory unit 120 stores a control program 121 executed by the control unit 110, a commodity master 122, an order database (DB) 123, and a membership database (DB) 124 or the like. The commodity master 122 stores various kinds of information about a commodity for sale at the store. The control program 121 may be an operating system and/or a program for implementing the functions of the server 100 in conjunction with an operating system. The commodity master 122 stores a commodity code in association with a commodity name, a price, information about tax rates to be applied, and the like.

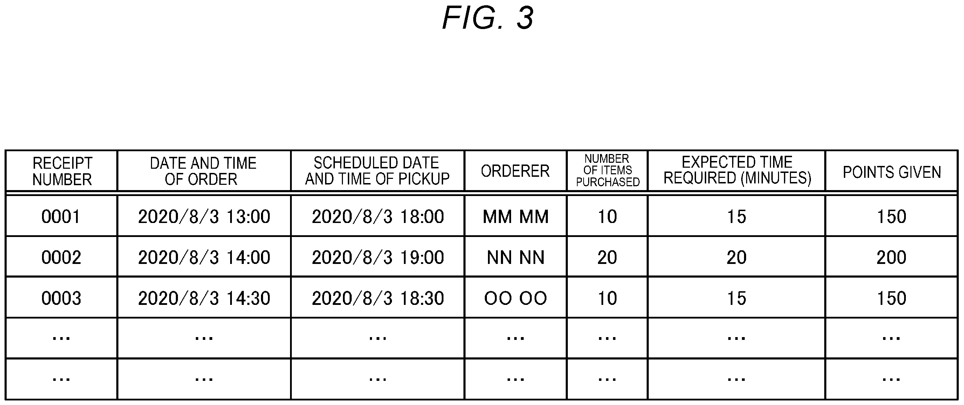

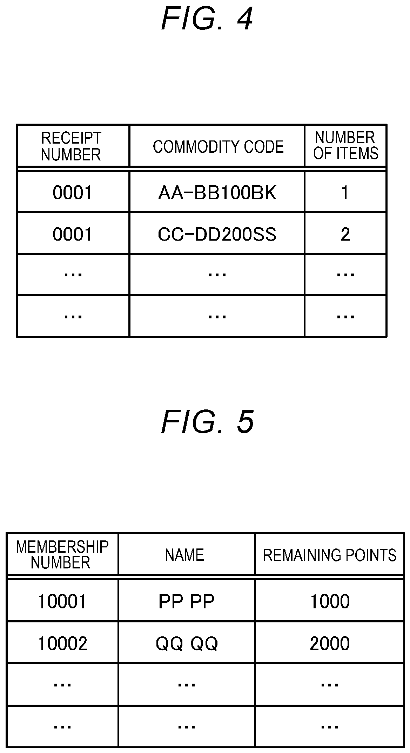

FIG. 3 shows an example of an order table stored in the order DB 123. FIG. 4 shows an example of order details stored in the order DB 123. The order table and the order details are an example of order information.

Each record in the order table shown in FIG. 3 is a pickup order that has a unique receipt number that differentiates the record from the other records in the order table. In each record a date and time of order, a scheduled date and time of pickup, an orderer's name, a total number of items in the order, an expected time required to complete the order, and points given for completion of the order.

The "date and time of order" is the date and time when the orderer entered the order. The "scheduled date and time of pickup" is the date and time when the orderer is scheduled to visit the store to pick up the ordered commodity. The "orderer" is the orderer's name or other identification means. The "number of items purchased" is the total number of items in the order.

The "expected time required" is the time estimated to be required for picking up all the ordered commodity items. For example, the expected time required increases as the number of items being purchased increases. The expected time required also increases as the weight and size of the items to be purchased increases.

The "points given" is a reward for completion of the pickup work corresponding to the order. The reward is set, for example, according to the expected time required. The reward may also be set according to the degree of urgency related to completion of the task (such as when the schedule time for pickup is near, the urgency increases). In this embodiment, the reward is points that can be used only at the store (e.g., customer reward points otherwise associated with a customer loyalty program). However, in practical use, any incentive may be employed, such as, for example, cash payments, coupons, vouchers, prizes, etc.

In the order details table shown in FIG. 4 each record (row) stores a receipt number (of the same meaning the receipt number as in the order table), a commodity code, and a number of items. Within the order details table, a plurality of records may have the same receipt number to reflect an order requesting several different items or the like. The order details table it is the combination of receipt number and commodity code that represents uniqueness. The commodity code can be formed of numerals and alphabet letters and is information that can identify a particular commodity type. In this context, the "number of items" reflects how many items with a particular commodity code have been ordered.

FIG. 5 shows an example of a membership information table stored in the membership DB 124. Each record (row) in the membership information table stores a name and remaining points (points balance) in association with a membership number. The membership number is unique to each member. The membership number (one example of identification information) is a number assigned to a worker member different from one worker member from another. The "name" value is the name of a worker member associated with membership number. The "remaining points" value reflects the points given to or otherwise accumulated by the worker member minus any such points that have been previously used.

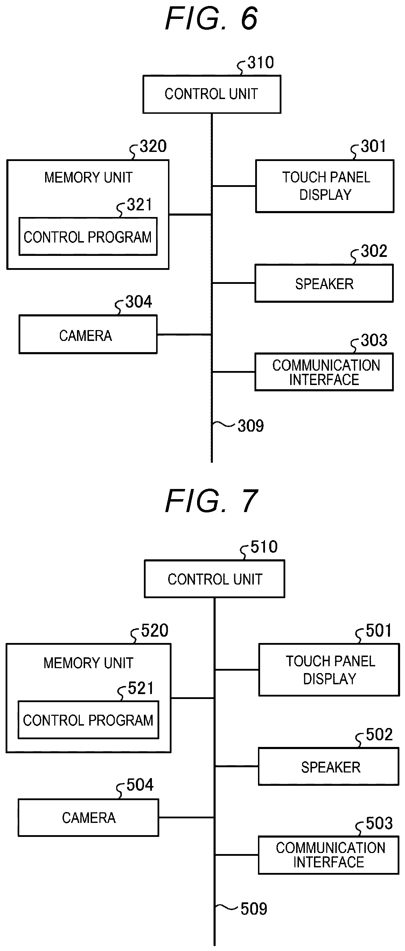

FIG. 6 is a block diagram showing a schematic configuration of the cart POS 300. The cart POS 300 has a touch panel display 301, a speaker 302, a communication interface 303, a camera 304, a bus 309, a control unit 310, and a memory unit 320 or the like.

The touch panel display 301 has a screen displaying information for an operator (e.g., a pickup member), and a sensor detecting the position touched on the screen . The touch panel display 301 accepts an input operation corresponding to displayed content. The speaker 302 is a device outputting a sound.

The communication interface 303 is an interface for communicating with another device (for example, the server 100 or the sales clerk terminal 500) via the wireless router 400 and the network 200. The bus 309 is a system bus such as a data bus or an address bus and connects the touch panel display 301, the speaker 302, the communication interface 303, the control unit 310, and the memory unit 320 to each other.

The camera 304 is an image sensor such as a CCD (charge-coupled device) or a CMOS (complementary MOS). The camera 304 acquires an image of the external appearance of a commodity for example. The control unit 310 acquires a code symbol such as a barcode or a two-dimensional code attached to the commodity, from the image output from the camera 304, and acquires information such as the commodity code by decoding the code symbol.

The control unit 310 (controller) is a computer or the like that controls the operations of the cart POS 300 and provides various functions of the cart POS 300. In this example, the control unit 310 has a CPU, a ROM, and a RAM The CPU manages and controls the operations of the cart POS 300. The ROM stores various programs and data. The RAM temporarily stores various programs and various data. The CPU executes the programs stored in the ROM or the memory unit 320, using the RAM as a work area.

The memory unit 320 is a memory device such as a flash memory. The memory unit 320 stores a control program 321. The control program 321 can be an operating system or a program for implementing the functions of the cart POS 300 in conjunction with an operating system.

FIG. 7 is a block diagram showing a schematic configuration of the sales clerk terminal 500. The sales clerk terminal 500 can be a general POS terminal device or a self-service POS. The sales clerk terminal 500 has a touch panel display 501, a speaker 502, a communication interface 503, a camera 504, a bus 509, a control unit 510, and a memory unit 520 or the like.

The touch panel display 501 has a screen displaying information for an operator (sales clerk), and a sensor detecting a position touched on the screen. The touch panel display 501 accepts an input operation corresponding to displayed content. The speaker 502 is a device for outputting a sound.

The communication interface 503 is for communicating with another device via the network 200. For example, the communication interface 503 is for communicating with the server 100 and/or the cart POS 300 via the wireless router 400. The bus 509 is a system bus such as a data bus or an address bus and connects the touch panel display 501, the speaker 502, the communication interface 503, the camera 504, the control unit 510, and the memory unit 520 to each other.

The camera 504 is an image sensor such as a CCD or a CMOS. The camera 504 acquires an image of the external appearance of a commodity. The control unit 510 acquires a code symbol such as a barcode or a two-dimensional code attached to the commodity from the image output from the camera 504, and acquires information such as the commodity code via the code symbol.

The control unit 510 (controller) is a computer that controls the operations of the sales clerk terminal 500 and implements various functions of the sales clerk terminal 500. The control unit 510 has a CPU, a ROM, and a RAM The CPU manages and controls the operations of the sales clerk terminal 500. The ROM stores various programs and data. The RAM temporarily stores various programs and various data. The CPU executes the programs stored in the ROM or the memory unit 520, using the RAM as a work area.

The memory unit 520 is a memory device such as a flash memory. The memory unit 520 stores a control program 521. The control program 521 can be an operating system or a program for implementing the functions of the sales clerk terminal 500 which operates in conjunction with an operating system.

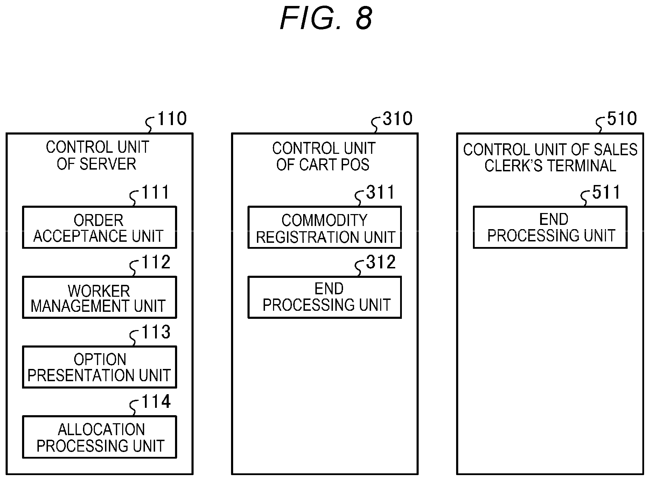

FIG. 8 is a block diagram showing a functional configuration of each of the control units 110, 310, 510.

The control unit 110 of the server 100 executes the control program 121 and thus functions as an order acceptance unit 111, a worker management unit 112, an option presentation unit 113, and an allocation processing unit 114 or the like.

The control unit 310 of the cart POS 300 executes the control program 321 and thus functions as a commodity registration unit 311 and an end processing unit 312 or the like.

The control unit 510 of the sales clerk terminal 500 executes the control program 521 and thus functions as an end processing unit 511 or the like.

The order acceptance unit 111 accepts an input of information (for example, the commodity code and the number of items) regarding a commodity to be purchased from a customer's terminal connected via the Web. The order acceptance unit 111 stores the information as order information (for example, in an order table and an order details table) in the memory unit 120. The customer's terminal is, for example, a PC (personal computer), a smartphone or the like. The customer is the orderer in the order pickup service in this embodiment.

The worker management unit 112 identifies which, if any, pickup members (worker members) are in the place of duty (e.g., the store)by the acceptance of an input of a membership number included in the membership DB 124. The membership number is input, for example, by causing the camera 304 of the cart POS 300 to pick up an image of a barcode or the like displayed on a membership card that certifies pickup membership. If the image from the camera 304 includes a barcode on a membership card of a pickup member, the control unit 110 of the server 100, as the worker management unit 112, determines that the pickup member corresponding to the membership number indicated by the barcode has logged in to the system from the cart POS 300 as a worker.

The option presentation unit 113 presents order information read out from the order DB 123 and accepts a task selection operation from the pickup member. More specifically, in this example, the order information is transmitted to the cart POS 300 and displayed on the touch panel display 301 of the cart POS 300. The pickup member then selects an order/task to be fulfilled by a touch operation on the touch panel display 301.

The allocation processing unit 114 then allocates the order information (corresponding to the task selection operation accepted by the option presentation unit 113) as the work of the pickup member. The allocation processing unit 114 also clears the order DB 123 so that the order information already allocated to a pickup member is eliminated from the presentation targets presented by the option presentation unit 113 for other pickup members. This clearing may place or set a flag value indicating that the order information has already been allocated, or the like, instead of deleting the record.

The cart POS 300 in this embodiment is configured to display image information and text information received from the server 100 on the touch panel display 301, and to transmit user input/selections to the server 100. However, in some examples, the cart POS 300 may incorporate or provide the functions of the worker management unit 112, the option presentation unit 113, and the allocation processing unit 114 otherwise provided by the server 100.

The cart POS 300 in this embodiment is configured to access the server 100 every time the cart POS 300 needs information from the commodity master 122, the order DB 123, and the membership DB 124 or the like that are stored and managed in the memory unit 120 of the server 100. However, in other examples, such information may also or instead be stored (in full or in part) in the memory unit 320 of the cart POS 300 itself, and every time there is an update, the server 100 and the cart POS 300 may transmit and receive the updated information to and from each other.

The commodity registration unit 311 reads a barcode or the like attached to a commodity from an image from the camera 304 and acquires a commodity code, as in the related art.

The end processing unit 312 declares the completion of pickup work for the cart POS 300. This enables a shift to the transaction processing by the sales clerk. The sales clerk checks that the appropriate items have been picked up by the worker member.

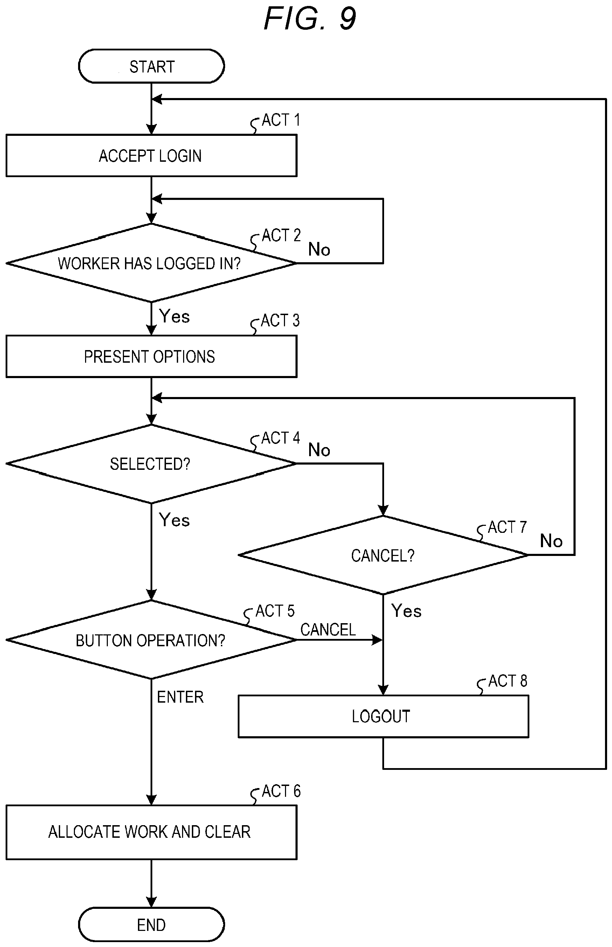

FIG. 9 is a flowchart showing an example of processing executed in the system. First, the cart POS 300 starts by accepting a member login (ACT 1) and waits for a login as a member worker (No in ACT 2).

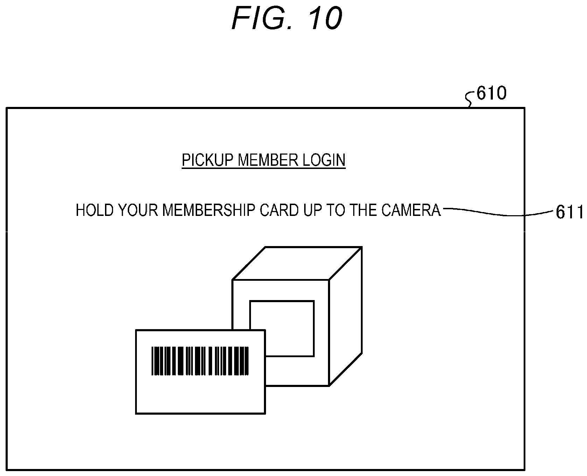

FIG. 10 shows an example of a pickup member login screen 610. The login screen 610 is a screen displayed on the touch panel display 301 of the cart POS 300 and includes, for example, a guide 611 showing "Hold your membership card up to the camera" or the like. Following this guide 611, a pickup member causes the camera 304 to acquire an image of a barcode on the membership card. If the barcode included in the image from the camera 304 matches a membership number in the membership DB 124, the worker management unit 112 of the server 100 determines that the pickup member corresponding to the membership number has logged in to the system from the cart POS 300 as a member worker.

When the member worker has logged in (Yes in ACT 2), the cart POS 300 then presents the various task options that have been transmitted from the option presentation unit 113 (ACT 3). The presented options reflect pickup orders from Web customers still requiring items to be gathered for fulfillment. Information displayed as the work options can be extracted from the corresponding order information.

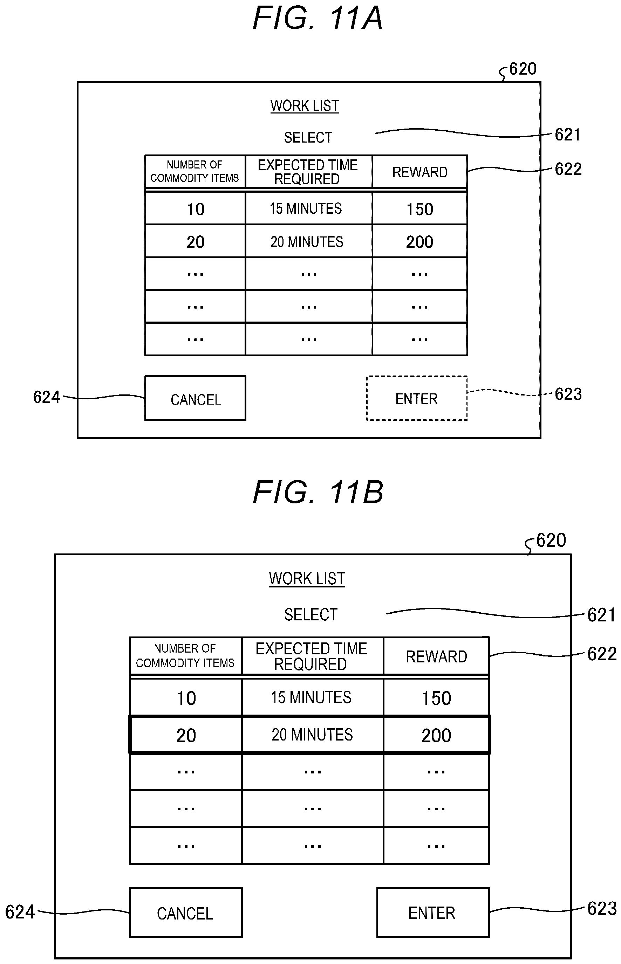

FIGS. 11A and 11B show an example of a work list selection screen 620. The selection screen 620 includes a guide 621, a list 622, an enter button 623, and a cancel button 624. The guide 621 indicates the purpose of the selection screen 620, for example, a text such as "Select".

The list 622 shows a list of work options, that is, work tasks that can be selected by the worker, in the form of a table. The individual rows in the list 622 provide summary information related to the work associated with different orders. Each row shows a number of commodity items, an expected time required, and a reward. These pieces of information can be extracted or estimated from the order information. The number of commodity items is the total number of commodity items included in the order. The expected time required is the time estimated to be taken from the start to the completion of the work task. The reward is the points to be given to the member worker (pickup member) as remuneration for the work.

The list 622 presents the orders (options) according to the scheduled date and time of commodity pickup, the expected time required for the work, the number of commodity items, or the amount of reward for the pickup member.

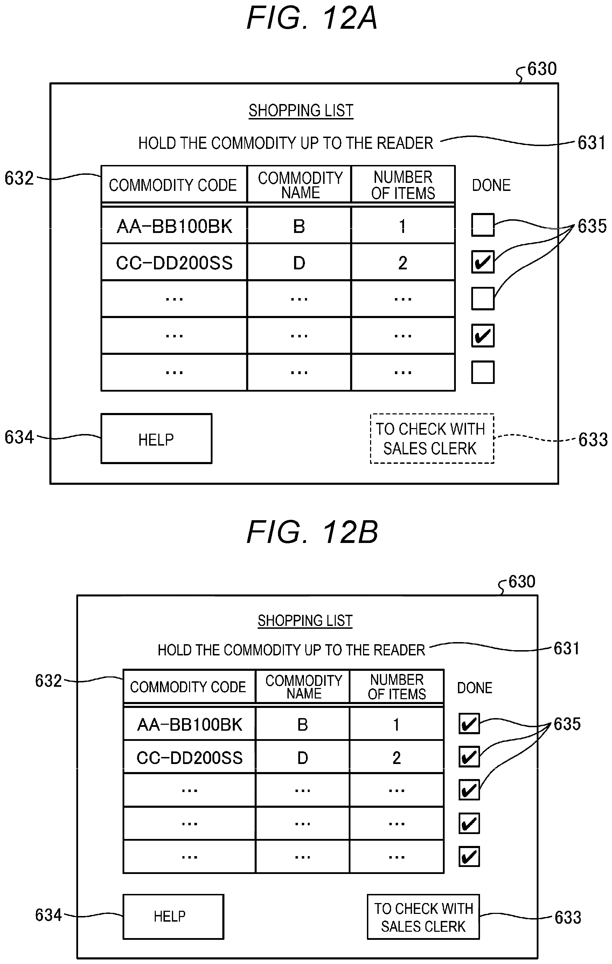

The enter button 623 is configured to accept a finalization of the selected work from the list 622. Once the selection operation is accepted, the display on the touch panel display 301 shifts to the next screen (a clearing screen 630 shown in FIG. 12A). The enter button 623 is not ready to accept an operation until at least one of the rows in the list 622 has been selected.

The cancel button 624 cancels the operation on the selection screen 620 and returns the display on the touch panel display 301 to the login screen 610 or the like.

The a particular selection of a row in the list 622 can be changed on the selection screen 620 until operation on the button 623 or 624.

The cart POS 300 displays work as the list 622, as shown in FIG. 11A. The member worker selects a work tasks which the worker will perform by referring to the information shown in the list 622. As shown in FIG. 11B, the row in the list 622 presently selected by the worker is highlighted, for example, being surrounded by a bold line. Also, the enter button 623 becomes ready to accept an operation once a row is selected.

When the worker has selected a row from the list 622 (Yes in ACT 4) and has operated the enter button 623 ("enter" in ACT 5), the cart POS 300 transmits information to that effect to the server 100. The allocation processing unit 114 of the server 100 allocates work to the worker whose login was accepted in ACT 2, and then performs clearing (ACT 6). In this context, clearing is the processing for eliminating the already allocated order information from the presentation targets presented by the option presentation unit 113, as described above. The clearing can be the placing/setting of a flag indicating that the order information is already allocated.

If no row is selected from the list 622 on the selection screen 620 (No in ACT 4) and the cancel button 624 is not operated (No in ACT 7), the processing returns to the selection waiting state (ACT 4). If a row is selected from the list 622 (Yes in ACT 4) and the cancel button 624 is operated ("cancel" in ACT 5), the worker is logged out (ACT 8) and the processing returns to ACT 1. If no row is selected on the list 622 (No in ACT 4) and the cancel button 624 is operated (Yes in ACT 7) the worker is logged out (ACT 8) and the processing returns to ACT 1. That is, if the cancel button 624 is operated at any time on the selection screen 620, the worker will be logged out (ACT 8) and the processing returns to ACT 1 regardless of whether a row is selected or not.

Next a shopping list is displayed on the touch panel display 301 of the cart POS 300 for the worker with allocated work. FIGS. 12A and 12B shows an example of a shopping list clearing screen 630. The clearing screen 630 includes a guide 631, a list 632, a sales clerk check button 633, a help button 634, and a check field 635. The guide 631 shows the intention of the clearing screen 630, for example, a text such as "Hold the commodity up to the reader".

The list 632 provides a shopping list corresponding to the allocated work, that is, information about ordered commodities, as a table. Each line in the list 632 indicates an ordered commodity and shows a commodity code, a commodity name, and a number of ordered items. The check field 635 shows a check mark after an image of the barcode on the corresponding commodity has been picked up by the camera 304 and the commodity is registered.

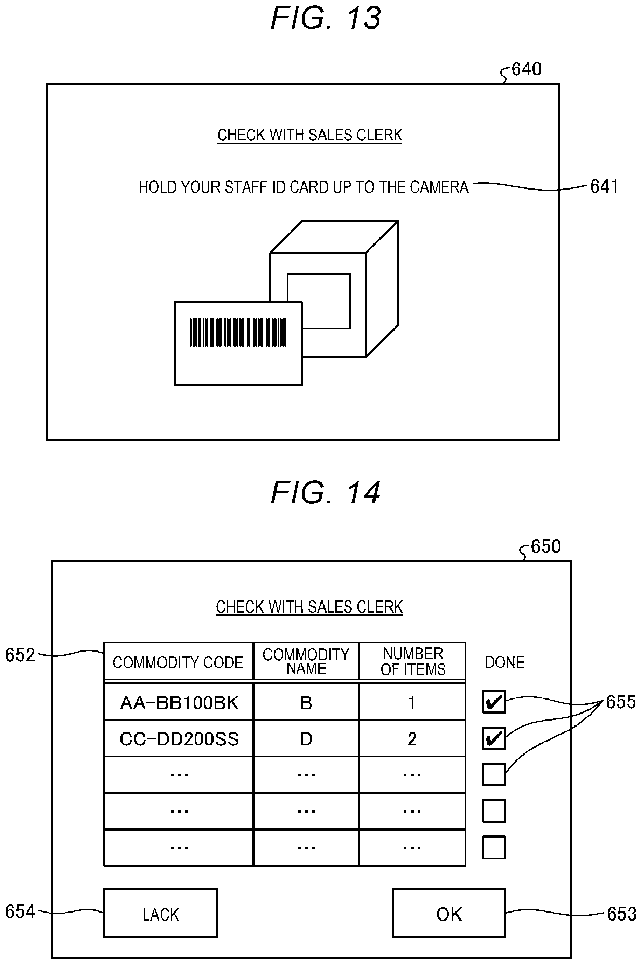

The sales clerk check button 633 is to communicate an intention to declare the completion of the work and request a sales clerk to check/confirm the completion. When the sales clerk check button 633 is operated, the display on the touch panel display 301 shifts to the next screen (a sales clerk login screen 640, shown in FIG. 13). The sales clerk check button 633 is not ready to accept an operation until a check mark is shown in each of the check fields 635 for all of the lines on the list 632.

The help button 634 is a button for calling a sales clerk if there is a need to ask a sales clerk for help, for example, if the cart POS 300 has a problem or the like. When the help button 634 is operated, information to that effect is reported to the server 100 and the sales clerk terminal 500. In response to this report, the server 100 and the sales clerk terminal 500 give a notification by a predetermined method (screen display or audio).

FIG. 13 shows an example of a sales clerk login screen 640. The login screen 640 is a screen displayed on the touch panel display 301 of the cart POS 300 and includes, for example, a guide 641 showing "Hold your staff ID card up to the camera" or the like. Following this guide 641, the sales clerk causes the camera 304 of the cart POS 300 to pick up an image of a barcode on the staff ID card. If the barcode included in the picked-up image from the camera 304 indicates a staff member, the cart POS 300 determines that the sales clerk has logged in to the system from the cart POS 300.

FIG. 14 shows an example of a sales clerk check screen 650. When the sales clerk has logged in, the cart POS 300 displays the sales clerk check screen 650. The sales clerk check screen 650 includes a list 652, a confirmation button 653 ("OK" button), a "lack" button 654, and a check field 655.

The list 652 is similar to the list 632 on the shopping list clearing screen 630. The check field 655 may be similar to the check field 635 on the shopping list clearing screen 630 or may be a toggle button that allows the sales clerk to show or hide a check mark manually (by a touch operation).

The confirmation button 653 is configured to declare that the check with the sales clerk, that is, the pickup of all the commodities in the list 652, is complete. When the confirmation button 653 is pressed, the processing is completed and the display on the touch panel display 301 returns to the login screen 610.

The lack button 654 is a button for shifting back to the processing of waiting for and accepting the addition of a commodity if one or more of the commodities on the list 652 has not yet been picked up by the member worker.

Such an allocation system enables a pickup member to engage in work and therefore can reduce or resolve labor shortages. Such an allocation system also enables a pickup member to visit the store at his or her convenience and freely select work. Thus, the order pickup service can be recognized as a preferable job which a worker finds it easy to engage in due to its flexible working hours and in which a worker is not allocated unwanted work. This makes it easier to secure workers who will execute the order pickup service.

Several modification examples of the embodiment will now be described. Each modification example is described mainly in terms of its difference from an example embodiment described above.

### Modification Example 1

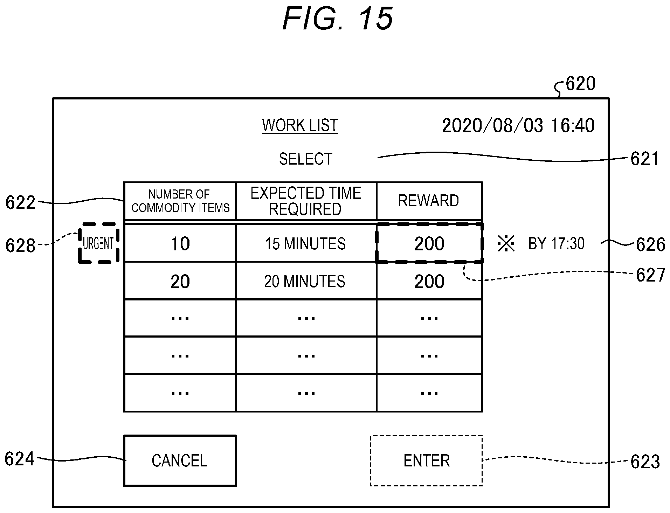

FIG. 15 shows another example of the work list selection screen 620. The server 100 in this modification example further includes a recommendation processing unit. The recommendation processing unit increases the reward for the worker member according to a predetermined rule with respect to order information in which the time until the scheduled date and time of pickup is less than a first threshold (for example, one hour). More specifically, the recommendation processing unit adds a scheduled date and time of pickup 626, a frame 627 for highlighting a reward increased from a usual amount, and a mark 628 indicating urgency, on the selection screen 620.

Thus, a pickup member can easily recognize that the work indicated by the mark 628 is urgent and is set to give a greater reward. The selection of such work is thus recommended.

### Modification Example 2

In an embodiment (and modification example 1), time may pass while no work is selected by a pickup member. Thus, the server 100 in this modification example further includes a notification processing unit. The notification processing unit notifies a sales clerk of order information in which the time until the scheduled date and time of pickup is less than a second threshold (for example, 30 minutes). Thus, the sales clerk notices an order for which pickup work has not yet been executed even though the schedule date and time of pickup is approaching, and can immediately cope with the situation.

### Modification Example 3

In an embodiment, a pickup member uses the cart POS 300. However, in other examples, a pickup member may use a mobile terminal, such as a smartphone owned by the pickup member, and a standard (non-POS type) shopping basket (or shopping cart) instead of a cart POS 300. In this case, preloaded application software can be installed on the mobile terminal of the pickup member. The application software provides functions similar to those of the cart POS 300 and causes the mobile terminal to display the pickup member login screen 610, the work list selection screen 620, and the shopping list clearing screen 630. In this case, the check by a sales clerk would be carried out via the sales clerk terminal 500. To transfer the processing information, the camera 504 of the sales clerk terminal 500 may, for example, pick up an image of a two-dimensional code displayed on the display unit of the mobile terminal by the end processing unit 312 of the mobile terminal, so that the end processing unit 511 of the sales clerk terminal 500 starts up.

### Modification Example 4

The clearing of the shopping list may be performed via a self-service POS terminal. The self-service POS terminal is a known device permitting a customer to register a commodity and make a settlement in a sales transaction. The self-service POS terminal in this modification example may thus have a hardware configuration that is commonly used, and may have, for example, a commodity registration unit 311, an end processing unit 312, and an end processing unit 511 according to an embodiment provided as a software configuration. In this case, the worker management unit 112, the option presentation unit 113, and the allocation processing unit 114 may be provided in application software installed in a mobile terminal owned by a pickup member. Alternatively, a dedicated terminal having these functional units may be installed at the entrance of the store or the like.

### Modification Example 5

In an embodiment, just one line in the list 622 is selected on the work list selection screen 620. However, other examples, a plurality of lines may be made selectable. In this case, a certain measure needs to be taken to distinguish between a plurality of work items when clearing the list 632 on the shopping list clearing screen 630. Such a measure may be, for example, accepting an operation of designating which work item is involved with the registration of a commodity, before or after the registration of the commodity by image pickup of a barcode, or the like.

The server 100 in the allocation system according to an embodiment has a control device such as a CPU, a memory device such as a ROM or a RAM, an external memory device such as an HDD or a CD drive device, a display device such as a display, and an input device such as a keyboard or a mouse, and has a hardware configuration corresponding to a general-purpose computer.

A program executed in the allocation system according to an embodiment can be provided as a recorded file in an installable format or an executable format in a computer-readable recording medium such as a CD-ROM, a flexible disk (FD), a CD-R, or a DVD (digital versatile disk).

A program executed in the allocation system according to an embodiment may be stored in a computer connected to a network such as the internet and may be downloaded or accessed via the network and provided in this form. A program executed in the allocation system according to an embodiment may be provided or distributed via a network such as the internet.

A program executed in the allocation system according to an embodiment may be built in a ROM or the like in advance and provided in this form.

The program executed in the allocation system according to the embodiment has a modular configuration which can be considered to include an order acceptance unit 111, a worker management unit 112, an option presentation unit 113, an allocation processing unit 114, a commodity registration unit 311, an end processing unit 312, and an end processing unit 511. The CPU (processor) reads out the program(s) from the recording medium and executes the instructions of the program, and thus various modular units can be considered to be loaded onto a main memory device.

The program executed by the cart POS 300 or the sales clerk terminal 500 in the allocation system according to the embodiment is built in a ROM or the like in advance and provided in this form. In other examples, the program for the cart POS 300 or the sales clerk terminal 500 may be provided as a recorded file in an installable format or an executable format in a non-transitory computer-readable recording medium such as a CD-ROM, a flexible disk (FD), a CD-R, or a DVD (digital versatile disk).

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. An allocation system for pick-up work orders, comprising:
a server configured to:
accept a customer pick-up order from a customer terminal and to store the customer pick-up order in a pick-up order list, the customer pick-up order including a list of items to be purchased, and
determine whether a worker member is available to fulfill customer pick-up orders based on acceptance of an input of identification information corresponding to the worker member; and
a worker member terminal configured to:
present information corresponding to customer pick-up orders on the pick-up order list after the worker member has been determined to be available, and
accept a selection operation by the worker member indicating a selection of one of the pick-up orders,
wherein the server is further configured to allocate the selected one of the pick-up orders to the worker member after the selection operation is accepted at the worker member terminal.

2. The allocation system according to claim 1, wherein the worker member terminal presents the information corresponding to the customer pick-up orders in order of a scheduled date and time associated with each customer pick-up order.

3. The allocation system according to claim 1, wherein the information presented on the worker member terminal for each customer pick-up order includes a scheduled date and time associated with the respective customer pick-up order, an estimated time required for fulfilling the respective customer pick-up order, a number of individual items in the respective customer pick-up order, and a reward amount for fulfilling the respective customer pick-up order.

4. The allocation system according to any one of claims 1 to 3, further comprising:
a sales clerk terminal configured to:
accept an operation from the worker member indicating that work allocated to the worker member has been completed, and
accept an operation from a sales clerk indicating a final check of the work allocated to the worker member has been completed.

5. The allocation system according to any one of claims 1 to 4, wherein the server is further configured to increase a reward amount for completion of a customer pick-up order when the time remaining until a scheduled date and time for the customer pick-up order is less than a threshold value.

6. The allocation system according to any one of claims 1 to 5, wherein the server is further configured to send a notification to notify a sales clerk when the time remaining until a scheduled date and time for the customer pick-up order is less than a threshold value.

7. The allocation system according to any one of claims 1 to 6, wherein the worker member terminal is configured as a cart-based point-of-sale terminal including a display screen, a commodity reader, and a network connection, the cart-based point-of-sale terminal being configured to accept a login of a worker member.

8. The allocation system according to claim 7, wherein the commodity reader is a barcode scanner.

9. The allocation system according to claim 7 or 8, wherein the display screen incorporates a touch panel.

10. A pick-up order allocation method, comprising:
accepting a customer pick-up order from a customer terminal and then storing the customer pick-up order in a pick-up order list, the customer pick-up order including a list of items to be purchased,
determining whether a worker member is available to fulfill customer pick-up orders based on acceptance of an input of identification information corresponding to the worker member via a worker member terminal;
after the worker member has been determined to be available, causing information to be presented on a display of the worker member terminal, the information corresponding to customer pick-up orders on the pick-up order list; and
in response to a selection operation at the worker member terminal by the worker member indicating a selection of one of the pick-up orders, allocating the selected one of the pick-up orders to the worker member after the selection operation is accepted at the worker member terminal.

11. The pick-up order allocation method according to claim 10, wherein the worker member terminal is a cart-based point-of-sale terminal.

12. The pick-up order allocation method according to claim 10 or 11, wherein the information corresponding to the customer pick-up orders is presented in order of a scheduled date and time associated with each customer pick-up order.

13. The pick-up order allocation method according to any one of claims 10 to 12, further comprising:
accepting an operation from the worker member indicating that work allocated to the worker member has been completed, and
accepting an operation from a sales clerk indicating a final check of the work allocated to the worker member has been completed.

14. The pick-up order allocation method according to any one of claims 10 to 13, further comprising increasing a reward amount for completion of a customer pick-up order when the time remaining until a scheduled date and time for the customer pick-up order is less than a threshold value.

15. The pick-up order allocation method according to any one of claims 1 to 14, further comprising sending a notification to notify a sales clerk when the time remaining until a scheduled date and time for the customer pick-up order is less than a threshold value.
